# EUROPEAN PATENT SPECIFICATION

(11) **EP 3 466 516 B1**
(45) Date of publication and mention of the grant of the patent: **12.02.2020**
(21) Application number: 17805920.0
(22) Date of filing: 17.05.2017
(51) Int. Cl.: B01D 27/08, B01D 29/13, B01D 35/30, F16J 15/46

(54) **SEALED CLOSURE SYSTEM FOR A CARTRIDGE FILTER AND METHOD FOR ASSEMBLING SAME**
ABGEDICHTETES VERSCHLUSSSYSTEM FÜR EINEN PATRONENFILTER UND VERFAHREN ZUR MONTAGE DAVON
SYSTÈME DE FERMETURE ÉTANCHE POUR FILTRE À CARTOUCHES ET SON PROCÉDÉ DE MONTAGE

(30) Priority: 30.05.2016 ES 201630705
(43) Date of publication of application: 10.04.2019
(73) Proprietor: Fluytec, S.A., 48950 Erandio (Vizcaya) (ES)
(72) Inventor: ZELAA IBARLUZEA, Andoni, 48950 Erandio (Vizcaya) (ES)
(74) Representative: Ungria López, Javier
(86) International application number: PCT/ES2017/070317
(87) International publication number: WO 2017/207836

(56) References cited:
- JP-A- 2016 007 567
- JP-A- 2016 007 567
- NL-B1- 2 013 406
- US-A- 5 833 847
- US-A1- 2008 308 479
- US-A1- 2010 044 303
- US-A1- 2013 093 106

## Description

### OBJECT OF THE INVENTION

The present invention relates to a sealed closure system for a cartridge filter.

It has a particular application in the industrial field relating to hydraulic filters.

### TECHNICAL PROBLEM TO BE RESOLVED AND BACKGROUND OF THE INVENTION

Cartridge filters are filtration equipment made up of filtration cartridges housed in a body which is connected to a hydraulic conduit and is, therefore, subjected to the hydraulic pressure at which the conduit is working. The pressure filter consists of a body, or collar, and one or several mechanically fixed covers. The attachment of the filter to the hydraulic conduit is performed in a manner that is known in the state of the art and is not part of the present invention, therefore the constructive form thereof is not described in detail.

Cartridge filters are used in different applications, such as systems for purification, for wastewater filtration, for the food industry, for the agricultural industry, and for desalination plants. In the application focusing on systems for desalination plants, glass fiber-reinforced polyester (GFRP) is used as a material because it exhibits optimal performance against waters with different degrees of salinity, which entails a considerable reduction in system maintenance.

Cartridge filters are systems which are basically made up of a body, which is connected to a hydraulic conduit, in which there is incorporated one or several cartridges with a material that is suitable for filtering water. The filter also incorporates a cover which sealingly closes it and, therefore, closes the hydraulic conduit as well. Thus, when pressure is imparted to the hydraulic conduit, the filter is also pressurized, with the water exerting pressure on the cover which is supported by the filter-incorporating closure system of the invention. However, the cover must be removable, such that access to the cartridges is enabled for inspection or replacement.

In the current state of the art, a range of devices relating to sealed closure systems used in cartridge filters are known. One of the most widely used systems is based on a cover-body flange union. This system allows removing the cover from the body to perform maintenance on the cartridges or to change them.

The cover-body assembly is tightened by a series of bolts and nuts placed around the union. The number and the dimensions of the bolts to be used are calculated according to the ASME code.

An existing alternative to the flange attachment consists of closure systems which include rocker nuts and bolts. These systems facilitate assembly because the screws are secured on the body. However, they are rather less cost-effective systems given that they do not use standard screws. Furthermore, they cannot be used in GFRP bodies, as they are intended for metallic parts.

Another alternative consists of closure systems with clamps. This system has a rather flexible closure with regard to the number of clamps to be used in each case, although it is less cost-effective than the preceding systems. It furthermore requires external fixing elements for the clamps, which are usually rods fixed to the outer wall of the body.

In that sense, the mentioned devices raise a series of problems, such as those mentioned below.

Maintenance times are high in systems which incorporate flanges. The maintenance for equipment with flanges requires an operator to remove all the studs from the flange union. This process may last for several minutes. Once maintenance has concluded (change of cartridges, cleaning, change of seals, etc.), the operator will have to screw each of the studs of the flange attachment back in according to a screw tightening pattern described in the maintenance manual.

As regards systems which use rocker nuts and bolts and systems with clamps, while it is certain that they may reduce maintenance time, it is also true that they are more expensive systems as they do not use standard screws, and they are normally not used in GFRP bodies.

Furthermore, corrosion-resistant materials are not used for these types of systems.

Finally, the manufacture of these systems in various components, made up of a body and one or two covers attached by means of flanges, means that they have a complex manufacture and assembly.

In the state of the art, there is an alternative system consisting of a closure system incorporating neither screws nor bolts, such that there has been an attempt to prevent the problems which these parts involve. The system is based on two recesses made in the body. An O-ring seal of an elastomeric material, such as EPDM, is placed in the first, innermost recess. The cover is assembled in the body supported on a projection, such that it exerts pressure on the seal, creating tightness in the filter. Closure elements exerting pressure on the cover, keeping the system fixed in place, are located in the outermost recess. This system has a series of problems, among which are included the difficulty in manufacturing and assembling the cover, since it must be of very precise dimensions so as to create an effective pressure on the O-ring seal and to establish the tightness that is sought.

US 5833847A discloses a sealed closure system for a cartridge filter wherein the complete closure of the lower cover of the corpus of the filter housing is achieved with an O-seal, which is located in a peripheral recess of the cover and firmly held in place by two or more split pins.

The present invention solves the problems mentioned above by presenting a sealed closure system for cartridge filters of any type of dimensions, entirely dispensing with mechanical attachments of any type by means of external elements. Therefore, the system has the following advantages:
- Lack of external fixing elements, clamps, external screws and nuts.
- Compact filter with a single body.
- Excellent corrosion-resistance.
- Simple opening and minimum maintenance.
- Valid for diameters of any dimension.
- Reduced space.
- Cost optimization.

### DESCRIPTION OF THE INVENTION

The present invention describes a sealed closure system for a cartridge filter.

The cartridge filter is formed by a cylindrical body where the filtration cartridges are housed.

The closure system comprises a cover which is fixed on the body of the filter to sealingly close it.

On one hand, the arrangement of the body is such that it has a projection, where the cover is supported, and a recess, located closer to the free end of the body, for housing a stop, the function of which is to prevent movement of the cover due to the pressure exerted by the fluid inside the filter. The stop is formed by at least two parts which may be separate, or which preferably may form a geometry of revolution having a quadrilateral section.

To facilitate the assembly and removal of the stop, the surface of at least one end, of at least one of the parts forming the stop, is not coplanar with the axis of rotation of the geometry of revolution.

On the other hand, the arrangement of the cover is such that it is housed in the body in a tight-fitting manner. The cover has a peripheral recess for housing a hollow and inflatable seal. The cover also has a hole through which there passes a tube, connected to the seal, for supplying a fluid, i.e., a liquid or gaseous fluid, from an external source for the inflation thereof.

The tube incorporates a closure mechanism, such as a key with a cock with a shut-off valve, or simply a stopper. The tube may also incorporate a hydraulic connection to the external fluid supply source.

The stop, housed in the recess of the body, is located on the cover, preventing movement of the cover due to the pressure exerted by the fluid of the hydraulic conduit inside the filter.

Thus, when the tube is connected to the external fluid supply source, the seal is inflated and exerts pressure on the inner wall of the body, thereby closing and sealing the filter.

Given that a usual application of the filter of the invention is for desalination plants, both the body and the cover are made with a polymer material, and more particularly with a glass fiber-reinforced polyester, such that they are able to withstand degradation due to contact with saline fluids.

The invention also describes the method for assembling the closure system in the filter. Starting with the tube and seal installed in the cover, this method comprises the following steps:
a) Introducing the cover into the body of the filter until it is supported on the projection;
b) Introducing the parts of the stop into the recess of the body;
c) Supplying fluid to the seal through the tube;
d) Closing the tube.

In particular, the fluid can be supplied to the seal by hydraulically connecting the tube to an external source. Thus, once a pressure of at least 1 bar has been reached, thereby generating the closure tightness between the seal and the inner surface of the body of the filter, the tube is closed and the external supply is closed.

### BRIEF DESCRIPTION OF THE FIGURES

To complete the description of the invention, and for the purpose of helping to make the characteristics thereof more readily understandable, according to a preferred exemplary embodiment thereof, a set of drawings is included where, by way of illustration and not limitation, the following figures have been represented:

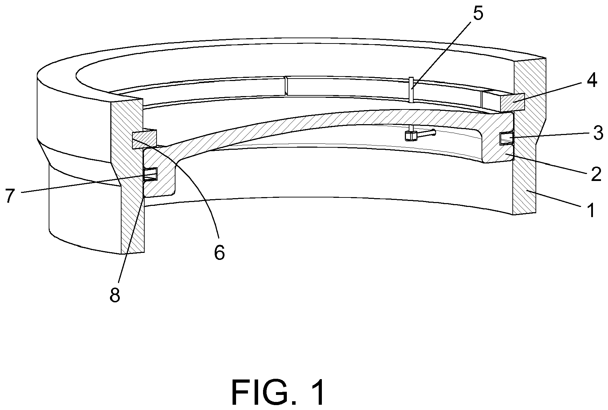

- Figure 1 represents a perspective view of the closure system of the invention, sectioned to show the elements forming it.
- Figure 2 represents a sectioned and exploded perspective view of the components of the closure system of the invention, with the exception of the stop, which is represented without having been sectioned.

A list of the references used in the figures is provided below:
1. Body.
2. Cover.
3. Seal.
4. Stop.
5. Tube.
6. Recess of the body.
7. Recess of the cover.
8. Projection.

### DESCRIPTION OF A PREFERRED EMBODIMENT OF THE INVENTION

The present invention relates to a closure system for a cartridge filter.

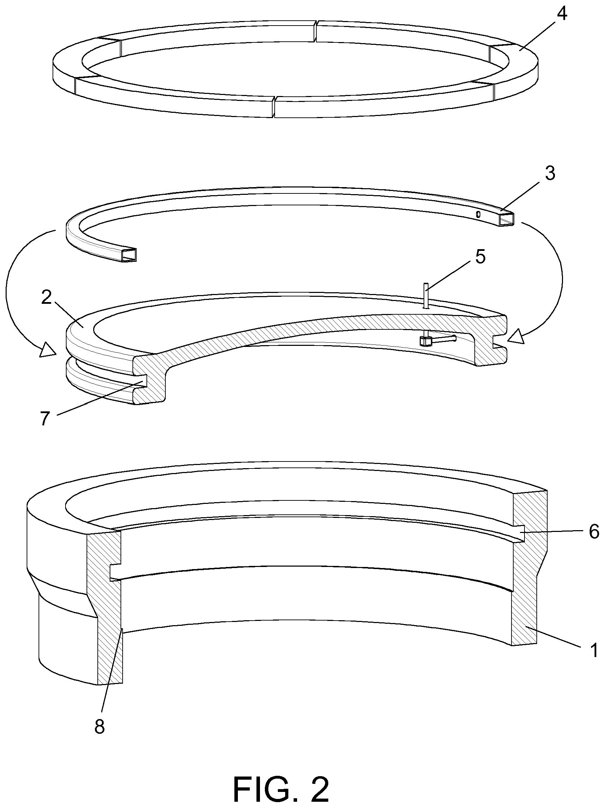

As can be seen in the figures, and with greater clarity in Figure 2, the cartridge filter in which the closure system of the invention is installed comprises a cylindrical body (1) in which the cartridges are inserted, which is connected to the hydraulic conduit through which the fluid to be treated flows.

The body (1) incorporates a projection (8) which serves as a base for housing the cover (2) by means of which the body (1) of the filter is closed. The cover (2) incorporates a peripheral recess (7) in which there is housed a seal (3) which is preferably flexible and hollow. The cover (2) also incorporates a hole for the passage of a tube (5) connected to the seal (3), intended for supplying a fluid to the seal (3) to inflate it, which fluid may be liquid or gaseous, although it is preferably water. In that sense, the tube (5) may incorporate a mechanism for the hydraulic connection to an external system such as a tank, a pipe, or simply a port. The tube (5) also incorporates a closure mechanism, such that once the pressure which assures the closure tightness between the seal (3) and the inner surface of the body (1) has been reached in the seal (3), it can be closed and the pressure maintained. The union of the hole to the cover (2) is properly equipped with a seal, such that said union is sealed. To create the required tightness, the minimum pressure that must be achieved in the seal (3) is 1 bar. Logically, the higher the pressure is, the better the achieved tightness will be.

Close to the projection (8) where the cover (2) is located, situated closer to the free end of the body of the filter, the body (1) incorporates a recess (6) for housing a stop (4). The function of the stop (4), once pressure is imparted in the hydraulic conduit, and therefore inside the filter, is to exert pressure on the cover (2) once it has been placed in its closed position, such that the cover (2) has no possibility of coming out of the body (1).

In a preferred embodiment, the stop (4) is formed by several parts formed as circular segments having a quadrilateral section which, once attached to one another, form a geometry of revolution which fits in the recess (6) of the body (1) in a complete manner. The parts into which the stop (4) is divided are created with orthogonal sections, that is, the sections are coplanar with the axis of rotation of the geometry of revolution.

In another embodiment of the stop (4), the ends of one of the parts forming the stop(4) are created by sections which are not coplanar with the axis of rotation of the geometry of revolution, having an angled geometry. This new geometry is established to even further facilitate the assembly and removal of the stop (4), such that the part with the angled geometry is the last part to be assembled and the first to be removed, acting as a closure part for the assembly. Furthermore, despite the fact that the part may have only one of its ends with this arrangement, or that there may be several parts with this arrangement, it is preferable for only one of the parts to have this arrangement, such that it is readily recognizable when the assembly is all put together.

Once all the parts forming the stop (4) have been introduced into the recess (6), they create a blockage against the movement of the cover (2) out of the body (1), which prevents it from being taken out.

In order to install the closure system, the cover (2), with the seal (3) and the tube (5) having previously been assembled, is introduced into the body (1) such that it is supported on the projection (8). The outer diameter of the cover (2) is slightly smaller than the inner diameter of the body (1), such that the cover (2) enters the body (1) in a tight-fitting manner. The different parts forming the stop (4) are subsequently fitted in the recess (6) of the body (1).

Once the cover (2) is placed in the body (1) and secured with the stop (4), the seal (3) is filled with a fluid which is preferably water, though said fluid may be air or any other type of gas, to prevent possible pressure losses. When fluid is supplied through the tube (5), the seal (3) swells up and presses against the inner wall of the body (1). In order for the seal (3) to create the tightness that is sought between the cover (2) and the body (1) of the filter, a pressure of at least 1 bar must be reached. When the seal (3) exerts pressure on the body (1) in the area of the largest diameter of the seal (3), the tube (5) is preferably connected to the seal (3) in the area of the smallest diameter, as it is the most readily accessible area of the system.

It is important to highlight that one object of the invention is for the system to be corrosion-resistant due to the composition of the water which is to be treated and which will be in contact with the elements of the filter of the invention. For this reason, the components are made with a polymer material. Furthermore, the seal (3) is preferably made with an elastomeric polymer. On the other hand, both the body (1) and cover (2) are preferably made with glass fiber-reinforced polyester.

Thus, the advantages obtained with this invention would be the following: due to the inflatable seal, greater tightness is obtained because the inflation pressure assures same. Likewise, since the seal can be deflated, it facilitates the assembly and removal of the cover (2) with respect to the body (1) due to the clearance existing between both elements, which translates into lower times in opening and closing operations when it comes to performing maintenance.

The invention also relates to the method for assembling the closure system in the filter. The cover (2) is first checked to assure it incorporates the tube (5) and the seal (3).

In that sense, the steps of the method are the following:
a) Introducing the cover (2) until it is supported on the projection (8);
b) Introducing the parts of the stop (4) into the recess (6) of the body (1);
c) Supplying fluid to the seal (3) until reaching a minimum pressure of 1 bar, which assures the closure tightness between the seal and the inner surface of the body (1);
d) Closing the tube (5).

In any case, the present invention must not be limited by the embodiment herein described. Other arrangements may be carried out by those skilled in the art based on the present description. Accordingly, the scope of the invention is defined by the following claims.

## Claims

1. Sealed closure system for a cartridge filter, comprising a cylindrical body (1) and a cover (2) which sealingly closes the body (1), **characterized in that:**
- the body (1) comprises a projection (8) for supporting the cover (2) and a recess (6) housing a stop (4),
- the cover (2) comprises a peripheral recess (7) housing a hollow and inflatable seal (3) and a hole for the passage of a tube (5) connected to the seal (3) for supplying a fluid,
where,
- the stop (4) is formed by at least two parts,
- the cover (2) is housed in the body (1) in a tight-fitting manner,
- the stop (4) housed in the recess (6) of the body (1) prevents movement of the cover (2) due to the pressure exerted by the fluid to be treated inside the filter,
such that, when the fluid is supplied in the tube (5), the seal (3) is inflated and exerts pressure on the inner wall of the body (1), thereby closing and sealing the filter.

2. Sealed closure system for a cartridge filter according to claim 1, **characterized in that** the tube (5) incorporates a closure mechanism for the passage of the fluid.

3. Sealed closure system for a cartridge filter according to claim 1 or 2, **characterized in that** the parts forming the stop (4) create a geometry of revolution when they are attached.

4. Sealed closure system for a cartridge filter according to claim 3, **characterized in that** the geometry of revolution of the stop (4) has a quadrilateral section.

5. Sealed closure system for a cartridge filter according to claim 3 or 4, **characterized in that** the surface of at least one end of at least one of the parts forming the stop (4) is not coplanar with the axis of rotation of the geometry of revolution.

6. Sealed closure system for a cartridge filter according to any one of the preceding claims, **characterized in that** the closure mechanism of the tube (5) is to be selected from a cock incorporating a shut-off valve and a stopper.

7. Sealed closure system for a cartridge filter according to any one of the preceding claims, **characterized in that** the tube (5) incorporates a hydraulic connection so as to enable being connected to an external fluid supply source.

8. Sealed closure system for a cartridge filter according to any one of the preceding claims, **characterized in that** the body (1) and the cover (2) are made with a polymer material so as to withstand degradation due to contact with saline fluids.

9. Sealed closure system for a cartridge filter according to claim 8, **characterized in that** the body (1) and cover (2) are made with glass fiber-reinforced polyester.

10. Method for assembling a sealed closure system for a cartridge filter according to the preceding claims, **characterized in that** starting from a situation in which the cover (2) has the tube (5) and the seal (3) installed therein, said method comprises the following steps:
a) Introducing the cover (2) into the body (1) until it is supported on the projection (8);
b) Introducing the parts of the stop (4) into the recess (6) of the body (1);
c) Supplying fluid to the seal (3) through the tube (5),
d) Closing the tube (5).

11. Method for assembling a sealed closure system for a cartridge filter according to claim 10, **characterized in that** in step c), the fluid is supplied to the seal (3) by hydraulically connecting the tube (5) to an external source.

12. Method for assembling a sealed closure system for a cartridge filter according to claim 11, **characterized in that** the fluid is supplied until reaching a pressure of at least 1 bar.

## Patentansprüche

1. Abgedichtetes Verschlusssystem für einen Patronenfilter, umfassend einen zylindrischen Körper (1) und einen Deckel (2), der den Körper (1) abdichtend verschließt, **dadurch gekennzeichnet, dass**:
- der Körper (1) einen Vorsprung (8) zum Halten des Deckels (2) und eine Aussparung (6) aufweist, die einen Anschlag (4) aufnimmt,
- der Deckel (2) eine periphere Aussparung (7), die eine hohle und aufblasbare Dichtung (3) aufnimmt und ein Loch für den Durchgang eines mit der Dichtung (3) verbundenen Rohrs (5) zur Zufuhr eines Fluids aufweist, wobei
- der Anschlag (4) aus wenigstens zwei Teilen besteht,
- der Deckel (2) eng anliegend in dem Körper (1) untergebracht ist,
- der in der Aussparung (6) des Körpers (1) untergebrachte Anschlag (4) eine Bewegung des Deckels (2) aufgrund des Drucks verhindert, den das zu behandelnde Fluid im Inneren des Filters ausübt,
so dass, wenn das Fluid in dem Rohr (5) zugeführt wird, die Dichtung (3) aufgeblasen wird und Druck auf die Innenwand des Körpers (1) ausübt, wodurch der Filter geschlossen und abgedichtet wird.

2. Abgedichtetes Verschlusssystem für einen Patronenfilter nach Anspruch 1, **dadurch gekennzeichnet, dass** das Rohr (5) einen Verschlussmechanismus für den Durchgang des Fluids enthält.

3. Abgedichtetes Verschlusssystem für einen Patronenfilter nach Anspruch 1 oder 2, **dadurch gekennzeichnet, dass** die den Anschlag (4) bildenden Teile beim Aufstecken eine Drehgeometrie erzeugen.

4. Abgedichtetes Verschlusssystem für einen Patronenfilter nach Anspruch 3, **dadurch gekennzeichnet, dass** die Drehgeometrie des Anschlags (4) einen viereckigen Querschnitt aufweist.

5. Abgedichtetes Verschlusssystem für einen Patronenfilter nach Anspruch 3 oder 4, **dadurch gekennzeichnet, dass** die Oberfläche wenigstens eines Endes wenigstens eines der den Anschlag (4) bildenden Teile nicht koplanar zur Drehachse der Drehgeometrie ist.

6. Abgedichtetes Verschlusssystem für einen Patronenfilter nach einem der vorhergehenden Ansprüche, **dadurch gekennzeichnet, dass** der Verschlussmechanismus des Rohrs (5) aus einem Hahn mit einem Absperrventil und einem Stopfen zu wählen ist.

7. Abgedichtetes Verschlusssystem für einen Patronenfilter nach einem der vorhergehenden Ansprüche, **dadurch gekennzeichnet, dass** das Rohr (5) eine hydraulische Verbindung aufweist, um eine Verbindung mit einer externen Fluidversorgungsquelle zu ermöglichen.

8. Abgedichtetes Verschlusssystem für einen Patronenfilter nach einem der vorhergehenden Ansprüche, **dadurch gekennzeichnet, dass** der Körper (1) und die Abdeckung (2) aus einem Polymermaterial hergestellt sind, um einer Degradation aufgrund eines Kontakts mit Salzflüssigkeiten zu widerstehen.

9. Abgedichtetes Verschlusssystem für einen Patronenfilter nach Anspruch 8, **dadurch gekennzeichnet, dass** der Körper (1) und der Deckel (2) aus glasfaserverstärktem Polyester bestehen.

10. Verfahren zum Zusammenbauen eines abgedichteten Verschlusssystems für einen Patronenfilter nach den vorhergehenden Ansprüchen, **dadurch gekennzeichnet, dass** ausgehend von einer Situation, in der in dem Deckel (2) das Rohr (5) und die Dichtung (3) eingebaut sind, das Verfahren folgende Schritte umfasst:
a) Einführen der Abdeckung (2) in den Körper (1), bis sie auf dem Vorsprung (8) ruht;
b) Einführen der Teile des Anschlags (4) in die Aussparung (6) des Körpers (1);
c) Zuführen von Fluid zu der Dichtung (3) durch das Rohr (5),
d) Verschließen des Rohrs (5).

11. Verfahren zum Zusammenbauen eines abgedichteten Verschlusssystems für einen Patronenfilter nach Anspruch 10, **dadurch gekennzeichnet, dass** in Schritt c) das Fluid der Dichtung (3) zugeführt wird, indem der Schlauch (5) hydraulisch mit einer externen Quelle verbunden wird.

12. Verfahren zum Zusammenbauen eines abgedichteten Verschlusssystems für einen Patronenfilter nach Anspruch 11, **dadurch gekennzeichnet, dass** das Fluid bis zum Erreichen eines Druckes von wenigstens 1 bar zugeführt wird.

## Revendications

1. Système de fermeture étanche pour un filtre à cartouche, comprenant un corps cylindrique (1) et un couvercle (2) qui ferme de manière étanche le corps (1), **caractérisé en ce que** :
- le corps (1) comprend une saillie (8) pour supporter le couvercle (2) et un évidement (6) logeant un organe d'arrêt (4),
- le couvercle (2) comprend un évidement périphérique (7) logeant un joint (3) creux et gonflable et un trou pour le passage d'un tube (5) relié au joint (3) pour fournir un fluide,
- l'organe d'arrêt (4) étant formé par au moins deux parties,
- le couvercle (2) étant logé dans le corps (1) de façon étanche,
- l'organe d'arrêt (4) logé dans l'évidement (6) du corps (1) empêche le mouvement du couvercle (2) en raison de la pression exercée par le fluide à traiter à l'intérieur du filtre,
de sorte que, lorsque le fluide est alimenté dans le tube (5), le joint (3) est gonflé et exerce une pression sur la paroi interne du corps (1), fermant ainsi le filtre et réalisant l'étanchéité de celui-ci.

2. Système de fermeture étanche pour un filtre à cartouche selon la revendication 1, **caractérisé en ce que** le tube (5) comporte un mécanisme de fermeture pour le passage du fluide.

3. Système de fermeture étanche pour un filtre à cartouche selon la revendication 1 ou la revendication 2, **caractérisé en ce que** les pièces formant l'organe d'arrêt (4) créent une géométrie de révolution quand elles sont fixées.

4. Système de fermeture étanche pour un filtre à cartouche selon la revendication 3, **caractérisé en ce que** la géométrie de révolution de l'organe d'arrêt (4) présente une section quadrilatérale.

5. Système de fermeture étanche pour un filtre à cartouche selon la revendication 3 ou la revendication 4, **caractérisé en ce que** la surface d'au moins une extrémité d'au moins une des parties formant l'organe d'arrêt (4) n'est pas coplanaire avec l'axe de rotation de la géométrie de révolution.

6. Système de fermeture étanche pour un filtre à cartouche selon l'une quelconque des revendications précédentes, **caractérisé en ce que** le mécanisme de fermeture du tube (5) doit être choisi parmi un robinet comprenant une vanne d'arrêt et un obturateur.

7. Système de fermeture étanche pour un filtre à cartouche selon l'une quelconque des revendications précédentes, **caractérisé en ce que** le tube (5) comporte un raccord hydraulique tel qu'il permet le fait d'être raccordé à une source externe d'alimentation en fluide.

8. Système de fermeture étanche pour un filtre à cartouche selon l'une quelconque des revendications précédentes, **caractérisé en ce que** le corps (1) et le couvercle (2) sont réalisés en un matériau polymère afin de résister à la dégradation due au contact avec des fluides salins.

9. Système de fermeture étanche pour un filtre à cartouche selon la revendication 8, **caractérisé en ce que** le corps (1) et le couvercle (2) sont réalisés en polyester renforcé de fibres de verre.

10. Procédé d'assemblage d'un système de fermeture étanche pour un filtre à cartouche selon les revendications précédentes, **caractérisé en ce que**, à partir d'une situation dans laquelle le tube (5) et le joint (3) sont installés dans le couvercle (2), ledit procédé comprend les étapes suivantes :
a) Introduire le couvercle (2) dans le corps (1) jusqu'à ce qu'il repose sur la saillie (8) ;
b) Introduire les parties de l'organe d'arrêt (4) dans l'évidement (6) du corps (1) ;
c) Alimenter le joint (3) en fluide par le tube (5),
d) Fermer le tube (5).

11. Procédé d'assemblage d'un système de fermeture étanche pour un filtre à cartouche selon la revendication 10, **caractérisé en ce que**, dans l'étape c), le fluide est fourni au joint (3) par le fait de raccorder hydrauliquement le tube (5) à une source externe.

12. Procédé d'assemblage d'un système de fermeture étanche pour un filtre à cartouche selon la revendication 11, **caractérisé en ce que** le fluide est alimenté jusqu'à atteindre une pression d'au moins 1 bar.
